# EUROPÄISCHE PATENTANMELDUNG

(11) **EP 1 273 361 A1**
(43) Veröffentlichungstag der Anmeldung: **08.01.2003**
(21) Anmeldenummer: 01116526.3
(22) Anmeldetag: 07.07.2001
(51) Int. Cl.: B09B 3/00

(54) **Herstellung von Produkten aus Rest- und Abfallstoffen und organischen Stoffen**

(71) Anmelder: Philipp, Stephanie, 63594 Hasselroth (DE); Philipp, Dennis Christopher, 63594 Hasselroth (DE)
(72) Erfinder: Philipp, Franz Josef, 63594 Hasselroth (DE)

(57) **Zusammenfassung**

Erfindung zur Herstellung von Produkten über Steuerung von Ionenbindungen, Atombindungen bzw. Metallbildung, Halbmetalle, Legierungsarten hauptsächlich aus Restund Abfallstoffen und organischen Stoffen.

## Beschreibung

Die Erfindung ist die Grundlage zur Herstellung von Produkten aus vornehmlich Abfällen, Rohstoffen sowie Organikstoffen und anderen Stoffen.

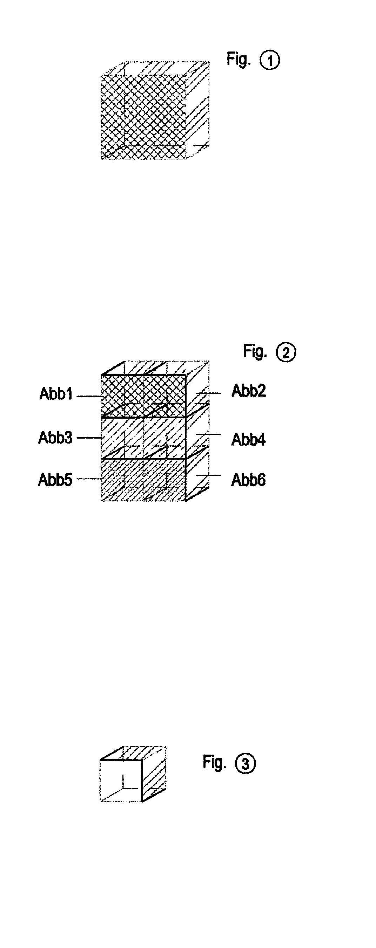

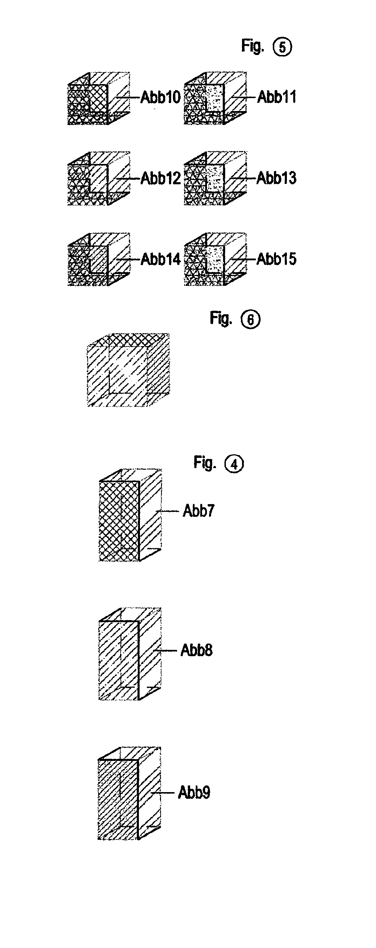

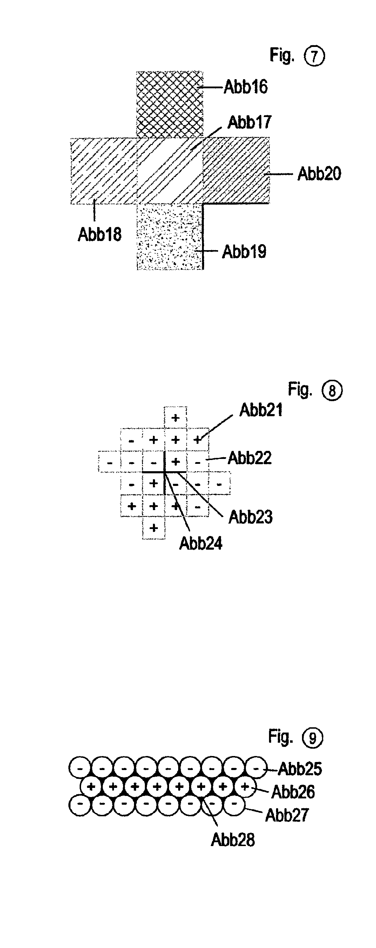

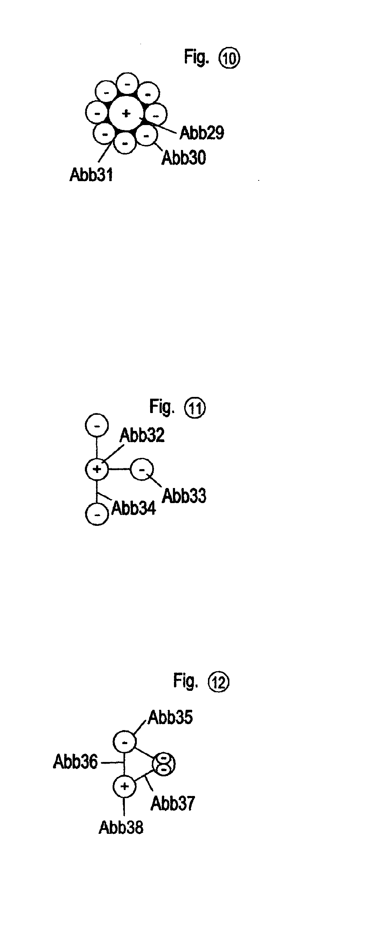

Bei der Produktion von Waren, z. B. bei der Herstellung von Eisen aus Roherz, entsteht ein erheblicher Anteil von Produktionsresten und Abfallstoffen, die zur Zeit nicht oder nur unter sehr hohen Kostenaufwendungen wiederverwertet werden können. Die meisten Stoffe, die bei der Weiterveredlung anfallen, sind Sonderabfall und können zur Zeit nur mit erheblichem Kostenaufwand deponiert, entsorgt oder wiederverwertet werden. Die bekannten Verfahren und Techniken sind nicht oder nur teilweise geeignet, diese Problemstoffe zu bearbeiten, aus dem Abfall Reststoff ein marktfähiges Produkt herzustellen. Mit der Erfindung ist es möglich geworden, Rest- und Abfallstoffe insbesondere diese Abfallstoffe in marktfähige Produkte zu führen und dies kostengünstig. Die beim Prozess entstandene Schlacke, der entstandene Filterstaub (Flugasche) sowie der Zunder sind mit herkömmlichen Verfahren nur kostenaufwendig zu entsorgen oder in Teilbereichen wiederverwertbar. Diese Abfälle werden im unsortierten Zustand in eine eigens erfundene Anlage eingebracht. Die Einbringung der Stoffe erfolgt mittels herkömmlicher Techniken bis auf den Unterschied, dass bei der Einbringung der Stoffe der Aggregatszustand zur Bestimmung der Zuatandsdiagraminstruktur des Stoffes mittels Festlegung einer Rasteroberfläche, die mit Ionenstruktur und Verbinderstruktur der Elektromoleküle festgehalten wird (Fig. 1).
Der eingebrachte Stoff ist somit vom System erfasst und wird vom Rechner in allen bis ins kleinste Detail zerlegt. Die Zerlegung erfolgt in einer Kette von Kristallgitterkennungen mit Anknüpfimgswinkel (Fig. 2, Fig. 3, Fig. 4, Fig. 5, Fig. 8, Abb. 23, Abb. 24) mit dem nun entstandenen Anknüpfimgspunkt (Kernpunkt) im Zusammentreffpunkt des Anknüpfüngswinkels im Verhältnis der Berechenbarkeit der Winkel zur Fläche, die Fläche zum Körper, der Körper zum Ganzen, das Ganze zum Einzelnen in einer Einzel- und Hauptschlüsseltechnik eingebetteten Schließung. Das Schließfeld ist wie Figur 1 im Hauptschlüssel festgelegt, der nun als Generalschlüssel Verwendung findet mit der Zuordnung von Einzelschlüsseln. Der Schlüssel ist im Code bei Protein (Eiweiß) als Generalschlüssel für einzelne Gruppen von Stoffen z. B. organische Stoffe, die mit silikatischen Stoffen und metallischen Stoffen mit Additiven angereichert Generalschlüssel- und Einzelschlüsselfünktion haben. Als Einzelschlüssel können nun weitere Schlüsselgruppen entsprechend des Codes z. B. Erdalkali, Kohlenstoff, Silizium, Stickstoff, Phosphor, Phosphorwasserstoff, Alkane, Chloralkane, Sauerstoff Schwefel, Hydrogene, Chlor, Chrom und alle bekannten Elemente zum Einsatz. Die Kennung erfolgt codiert und ist wie in Fig. 2 Abb. 1, Abb. 2, Abb. 3, Abb. 4, Abb. 6 als Einzelcode, sowie der Gesamtcode dargestellt und mittels Rechner zuordnungsfähig. Die Zuordnung ist nach Eigenschaften geordnet und richtet sich nach Zieleigenschaften der Eigenschaften der oder des Endproduktes. Im Falle von Zunder, der bei der Herstellung von Eisen entstanden ist, nun wiederum auf der Basis dieser Erfindung, entsprechend der Beschreibung in ein Silikatraster eingebettet wird. Mit dem Vorgang der begrenzten Einbettung in das Silikatraster mittels Additiv wird der Zunder zu einer Roherzmasse gebunden, das Eisen durch den Schlüssel der Schmelzzone ca. 2000 Grad C. ausgefällt, die genaue Bestimmung der Ausbringung erfolgt erst bei 1600 Grad C. mittels Silikat und Additiv und im Kernpunkt des Eisen selbst wird dies bei 1400 Grad C. entschlüsselt, wobei bei den Hilfsstoffen und bei weiteren Stoffen das gesamte Kristallwasser ausgebracht ist Somit die Hilfsstoffe selbst nun für weitere Produktketten als Basisstoff Verwendung finden. Die Verlustfraktion, das giftige CO wird katalytisch gebunden, im Kreislauf gefahren bzw. einer Nachverbrennung zugeführt und somit umweltverhräglich verarbeitet. Die Bindung ist durch den Hilfsstoff, dem Additiv gewährleistet. So kann man nun sehr hohe Kosten reduzieren, den Hauptprozess sowie den Nebenprozess nach strengsten Umweltauflagen ausrichten. Die nun entstandenen neuen Produkte sind im Design Fig. 8 zu Fig. 9 aus dem Zugang der Anordnung genau und neu begonnen und entstanden. Bei der Erfindung sind nun das gesamte Verhalten der Stoffgruppen bindungsfähig wie Fig. 8 Abb. 22, Abb. 23 nach Fig. 9 Abb. 28, sowie die neue Anordnung der Kette Abb. 25, Abb. 26 und Abb. 27 erfolgreich erfolgt. Die Stoffe waren im Grundverhalten nicht einsatzfähig für den Folgeschritt und sind mit der Erfindung für den Folgeschritt einsatzfähig. Mit der Erfindung ist die Brücke der Einzelschritte zum Gesamtschritt ermöglicht. Wie Fig. 1 aufzeigt, ist die Anforderung mit Fig. 2 genau vorgegeben. Die Einzelteile werden in Fig. 2 wie Abb. 1 und Abb. 2 dargestellt mit den Teilen Abb. 3, Abb. 4, Abb. 5 und Abb. 6 verbaut. Die Art des Verhaltens der Stoffe ist jetzt genau ganz besonders bei Stoffgruppen wie Abfall- und Reststoffen im Raster zugeordnet. Die Bausteine sind mit Additiv bindungsfähig. Die Ausbaufähigkeit der Bausteine werden zum Schlüssel (Fig. 3). Die Passung der Schließung ist nun erreicht. Das Verhalten ist gezielt zu steuern. Die Größe der Teile, alle Eigenschaften der Einzelteile sind aufgeschlüsselt und werden mit dem Schlüssel der Eigenschaften des Zielproduktes geschlossen. Die Figur 3 wird in einem Verfahrensschritt nach Fig. 4 gebracht, die Intervallaufschlüsselung bringt. Aus Figur 3 ist nun Figur 4 entstanden und in 3 Hauptmerkmale eingefasst Abb. 7, Abb. 8 und Abb. 9 ist vollzogen. Die Prozessfolge bringt nun ein Aufschlüsselungsintervall nach dem anderen (Fig. 5 aus Abb. 7 wird nun Abb. 10 und Abb. 11 aus Abb. 8 wird gleichzeitig Abb. 12 und Abb. 13 weiter aus Abb. 9 ist Abb. 14 und 15 geworden) entstanden. Ein Intervall nach dem anderen ist ausgelöst. Aus Figur 5 wird Figur 6. Mit erreichen von Punkt X = Figur 6 wird Punkt Y = Figur 7 ermöglicht. Die vorprogrammierten Bahnen der Stoffgruppen sind stromlinienförmig angeordnet und wie Figur 7 Abb. 16, Abb. 17, Abb. 18, Abb. 20 und Abb. 19 aufgeschlüsselt. Die Form hat sich verändert, das Verhalten ist immer noch gleichbleibend. Die Zielvorgabe Z = Figur 8 kann neu gebaut werden. Plan und Körper sind passend. Jeder Baustein hat seine Position im Plan und im Körper. Nach Plan kommt Figur 8 Abb. 21 zu Abb. 22, Abb. 22 zu Abb. 23, Abb. 23 zu dem nächsten Glied der Kette und wie Abb. 24 aufgezeichnet zum Kernpunkt der Hauptverschließung, die durch den Vorgang der Gesamtentschlüsselung bis Figur 7 geschlossen ist. Jede Teilung in der Teilfolge einer im Kernpunkt ausgerichteten konvergenten Folge ist mit einer nichtkonvergenten Folge gepaart. Folgenhäufungspunkte sind divergente Folgen. Die Divergenz ist aus dem Verhalten abzuleiten, wobei die Unbeschränktheit der Eigenschaften das Verhalten im Produkt ausmacht. Jede beschränkte Folge besitzt einen Folgenhäufungspunkt. Die Grenzwerte sind aus der Struktur der Folge ablesbar. Die Fläche bis Figur 8 wird zur topologischen Kugel mit Logarithmusfunktion. Wiederum kommt nun bei der Erfindung jetzt ab Figur 9 die analytische Fortsetzung nach dem Kreislaufkettenverhalten. Die Potenzreihenentwicklung ist im Kernpunkt Abb. 24 verankert und Folge einer im Abfall genau codierten Eigenschaft Figur 8 zu Figur 9 Abb. 28 aus Abb. 29 fortgesetzt oder deutlich als Anfang bzw. Nullpunkt anzusehen. Die Lehre die aus Abfall eine Produktkette werden lässt, wird zum Teil als Gesamtheit neuer Produkte mit neuen Eigenschaften als designtes Silikat mit Hilfe von Additiven erreicht. Der Produktanspruch wird erreicht wie Figur 8 Abb. 24 und Abb. 23 immer rechtwinklige Dreiecke als Maßeinheit der Produkteigenschaften im Code enthalten und zum Ziel der Produkteigenschaft führen. Die Umrechnung von Fläche zum Körper ist möglich und wird nun genau in Abfolge zum Produkt geführt. Das Geheimnis der Erfolgsgarantie für jedes Produkt ist , dass die Eigenschaft und gleichbleibende Qualität in den Ketten jedes einzelnen Gliedes gleichstark ausgerichtet sind. Dies beim Einstand einer bis dahin nicht für möglich gehaltenen Stoffgruppe, den Abfällen und Reststoffen, die in hochwertigen Produkten in fast nicht erschöpfbaren Mengen als Rohstoffbasis zur Verfügung stehen. Die Produkte sind Zielprodukte. Die Aufgabe eines Produktes ist genau vorgegeben, z. B. eine Brücke die in einer nicht erschlossenen Gegend ohne jegliche Infrastruktur entstehen soll. Die Erfindung löst dieses Problem indem die Materialien herkömmlicher Brücken erheblich verbessert sind. Die Teile der Brücke sind in Einzelteilen vorgefertigt und werden an Ort und Stelle verbunden (verklebt) und mit einer statisch bindenden Masse ausgefüllt. Die Brücke ist wesentlich leichter wie eine herkömmliche Brücke und ist in der Lage erheblich höhere statische Lasten aufzunehmen. Zudem sind die Verbindungsteile zwischen Anker und Grund so gestaltet, dass den jeweiligen örtlichen Bedingungen Folge geleistet werden kann. Das System ist wie ein Zylinder mit Kolben in der Lagerung der Brückenaufhahmepunkte im Stützbereich konzipiert, wobei die Verspannung und Aufhängung in dieses System integriert ist. Die Lebensdauer des Baukörpers ist länger als die bei bekannten Konstruktionen und der Preis dieser Brücke ist wesentlich günstiger wie der Preis herkömmlich bekannter Brücken. Das Verbauen ist so konzipiert, dass mit angelerntem Personal unter Fachaufsicht vor Ort die Endmontage durchgeführt werden kann. Die Brücke ist formschlüssig verankert und als erdbebensicher anzusehen.

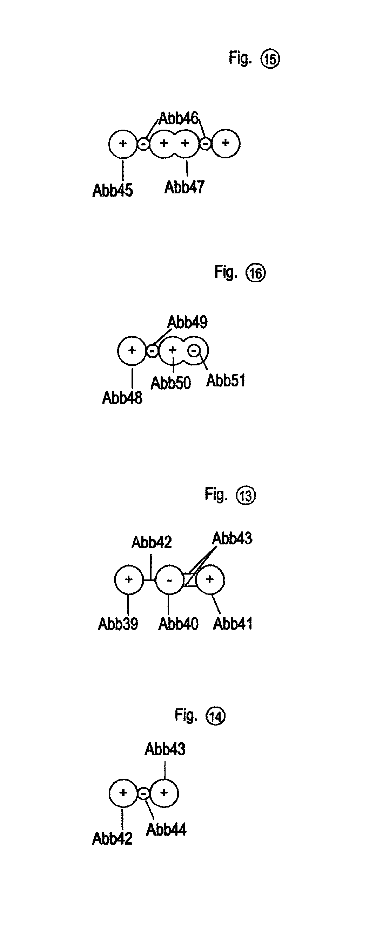

Die Ablage der Glieder in einer Kette sind in der Reihe von Gliedern geordnet (Fig. 9). Die erste Reihe ist Abb. 25 mit negativen Vorzeichen gekennzeichnet. Die zweite Reihe ist Abb. 26 mit positiven Vorzeichen gekennzeichnet. Die dritte Reihe ist Abb. 27 wiederum mit negativen Vorzeichen gekennzeichnet. Die Anordnung muss immer in dieser Reihe erfolgen, mit einer Reihe positiven Vorzeichen und zwei Reihen negativen Vorzeichen. Das Verhalten ist nun wieder zu gestalten indem man aus der Kette in topologische Kugeln als Kette mit Logarithmusfunktion Ziel um Ziel bis zum Zielprodukt erreicht (Fig. 10 Abb. 29 bis Abb. 31). In der Produktion werden die Stoffe mit Flutierungseinrichtungen ausgerichtet und über Trennverfahren getrennt, bis in die kleinsten Aufteilungen separiert und neu ausgerichtet und wiederum zusammengeführt. Die Hilfsmittel sind vorwiegend Additive, die das Verhalten (Fig. 11) aufzeigt Abb. 32 , eine Kennung mit positiven Vorzeichen per Schlüssel Abb. 34 als Binder der Kette in Teilbereichen bindet. Die Teile der Abb. 33 mit negativen Vorzeichen bindet. Die Anzahl der Bindungen ist gleich (Figur 11 und Figur 12) mit der wiederum erneuerten Zuordnung der Standpunkte, der Winkel, der Binder und der Anzahl der Körper aus zwei Negativvorzeichen gekennzeichneten Teile ist jetzt ein positiv gekennzeichnetes Teil geworden und mit einer Zweifach-Bindung des Minusvorzeichens Teilchens gebunden (Fig. 12 Abb. 35, 36, 37 und 38). Die Bahnen der Teile sind im Intervall ausgerichtet. Das Bindeverhalten geändert. Zielvorgaben über Struktur und Strömung, Oberfläche und Stellung als Einheit in der Gesamtheit in den Teilschritt eingebunden. Jeder Stoff ist mit dieser Erfindung einordnungsfähig. Nach der Einordnung kommt es per Stoff und Additiv zu einem Reaktionsverhalten. Da nach Figur 12 die Figur 13 mit Abb. 42 einer Einfachbindung aber auch Abb. 43 mit einer Doppelbindung in das Verhältnis Abb. 39 eintritt mit Positivvorzeichen gebundenes Teil mit Gegenstück Abb. 41 mit Positivvorzeichen gebundenes Teil mit Doppelbindung Abb. 43 zu Abb. 40 dem nun eingebetteten mit negativ gebundenem Teil entstanden ist. Im Detail zum Tragen kommt nun die Zieleigenschaft des Produktes in der Kette entsprechend näher ausgedrückt. Die Abläufe werden nun aus Figur 13 in der Dreiecksphase im Prozess zum Produkt aus der Fläche zum Dreieck Abb. 23 die Ketten in Verbindung mit drei entstandenen Verhaltenseigenschaften Abb. 23 zur Kette im Verhalten im Produkt Figur 14, Figur 15 und Figur 16 gezielt geschaffen.

Somit sind Elemente im Dreieck gebunden und in der Kette geschlossen.

Die Kemaussage ist die Gestaltung von Produkten mit Hilfe von Abfällen, die gebrauchsfähig, marktgängig zu hochwertigen Produkten geworden sind. Die Rohstoffquellen werden geschont, Abfälle nicht planlos vernichtet oder deponiert. Durch die Anordnung erfahrener Techniken in Verbindung mit der Erfindung sind nun anspruchsvolle Produkte unter Optimierung von Kostenersparnis garantiert. Die strengen Umweltauflagen, die bei derartigen Prozessen gefordert sind, sind mit Hilfe dieser Erfindungen sehr gut einhaltbar. Dies ist noch dadurch garantiert, dass durch die Kombination der Stoffe als Verfahrensträger und als Optimierungsträger von Eigenschaften die Stoffe über den Schlüssel Additiv zum erfolgreichen Produkt führen. Die Prozesse sind mit Vorbildern aus der Natur gekennzeichnet. Die bekannten Sekundärstrukturen wie bei den Kunststoffen gestreckte Kette, statische Knäule, gefaltete Kette und flexible Kette werden in den Silikatbereich engewandt. Die Netzwerke sind auf den Aggregatsstrukturen aufgebaut und als Kristall zu bezeichnen. Die Erfolgsformel liegt dabei, dass man nicht vier Zustände einpackt sondern nur drei Zustände und die immer in einen Körper Figur 7 Abb. 16, 17, 18 und Abb. 19 sowie nur noch Abb. 20 ausklappt und die fünfte Seite immer offen bzw. im System enthalten ist. Somit bekommt die Erfindung den Einsatz in allen Bereichen, wo aus Abfall ein Produkt oder aus Organik ein Silikat zum Produkt entsteht. Die Produkte erhalten neue bis dahin nicht bekannte Qualitätsmerkmale und können in der Kombination verschiedene Funktionen, die bis zu dieser Erfindung nicht möglich waren, nun erfüllen. Die gesamte Kette von Zuschlagsstoffen, die vom Grundverhalten verschieden sind und nun in Figur 16 wie Abb. 48 zu Abb. 49 den Zugang in einer in Abbildung 50 positiven Bindung sind. Durch die Überlappung der Abb. 51 dem Negativteil einer Funktion der Neuartigkeit dieser Erfindung im Detail aufzeichnet und kennzeichnet. Somit ist einer Erneuerung im Kettenverhalten im Element und dies bis zum kleinsten /größten Teil erfolgt. Es ist aus Figur 16 eine Verbindung einer mit Positivvorzeichen gekennzeichneten Gliederung zu einer mit negativ gekennzeichneten Gliederung mit einer Zwittergliederung entstanden Figur 17 Abb. 50 und Abb. 51. Das System kann in der Herstellung von künstlichen Diamanten wie bei der Verwendung von flüssigen Kohlenstoff-Graphitmischungen die Rolle der Binder im Kristallgitter ohne erhebliche Kostenaufwendungen erreichen. Die Funktion der Aufteilung zum kleinsten Teil wird durch die Beschleunigung der Teile gegeneinander im Prallwinkel einer Frequenz erreicht. Das man durch das gezielte Verbringen der Teilchen im Frequenzbereich den Tunneleffekt erhält. Die zwei Positivglieder sind somit zum Negativglied geworden. Das nur noch über das Zweierglied die Bindung ausgerichtet wird. Die Qualität auf Figur 13 Abb. 43 ist nun genau und im Quantensprung im Produkt im kleinsten Teilchen verbessert. Da im kleinsten Teilchen eine Verbindung Figur 16 nachgewiesen ist. Die Abb. 50 und Abb. 51 sind nur ein Teil. Das Entscheidungsmerkmal sowie die Positiv- und Negativkennzeichnung des Teilchens ist nun Bestandteil der Kette und somit der Anbindung. Die Verbinder sind mit den in der Natur vorkommenden Muscheln im Härteverhalten vergleichbar, können aber so designt werden, dass sie wie ein Spinnfaden eine hohe Elastizität zusätzlich bekommen. Die Kombination geht soweit, dass man Kugeln mit Kleinstwandungen verklebt und mit einer elastischen Faser kombiniert und somit ein Verhalten erzielt, dass hohe Kräfte bei wenig Gewicht und hoher Flexibilität aufnimmt. Die somit gefertigten Einzelteile wiederum als Lamellen miteinander verklebt, in den Klebefugen entsprechend hohe Anteile von Fasern anbringt und somit problemlos über sehr weite Strecken Verspannungen vornimmt, ohne weitere Ständer zu benötigen. Dieses System ist auch im Hausbau bei entsprechender Bauweise als erdbebensichere Bauweise einsetzbar und kann auf alle Bausysteme ausgeweitet werden, dies insbesondere im Landschaftsbau, Wasserbau usw. Mit diesem System sind Rohre und andere Bauteile ohne Positiv- und Negativschalung in hohen Stückzahlen bei gleichbleibend hoher Qualität produzierbar. Die Produkte sind in allen Lebensbereichen einsetzbar. Bei der Fertigung von Straßen werden Unterzüge ausgelegt, diese mit Füllstoffen gefüllt und verklebt und die eigentliche Deckschicht als Fertigteil aufgesetzt. Ähnlich dieser Bauweise werden auch Teile im Fahrzeugbau, Schiffsbau sowie in der Luftfahrt als vorgefertigte Teile Verwendung finden. Die Eigenschaften sind auf den jeweiligen Zweck ausgerichtet. Die Erfindung erleichtert erheblich die Verbesserung von Infrastrukturmaßnahmen und dient z. B. bei der Erzgewinnung mit entsprechender nachgeschalteter Technik gleichzeitig als Baustoffgewinnung. Die erfundenen Stoffe kommen somit im Hausbau, im Fahrzeugbau, im Wasserbau, in der Luftfahrt in allen Lebensbereichen zum Einsatz. Der Aspekt Rohstoffschonung zur Herstellung gezielter, hochwertiger Produkte, die wiederum wiederverwertbar sind, ist erreicht. Die Erfindung kann bei der Produktion zusätzlich die Abfälle verwerten, Strom und Trinkwasser produzieren und dies unter Einsatz von Abwasser und Salzwasser. Besonders effektiv wird die Erfindung beim Rückbau von Deponien. Es entsteht ein wertvoller Rohstoff zusätzlich Strom und Trinkwasser. Die hochgiftigen Stoffe werden neutralisiert. Die Erfindung ist die Basis für neue Produkte.

## Patentansprüche

1. Anspruch Nr. 1
**dadurch gekennzeichnet, dass** Silikatstrukturen die aus vorwiegend Abfällen gewonnen werden zum Produkt werden.

2. Anspruch Nr. 2
**dadurch gekennzeichnet, dass** wie in Anspruch Nr. 1 beschrieben, die Stoffe, Abfälle ein sonst schwer zu kennzeichnender Stoff mittels dieser Erfindung wie folgt gekennzeichnet wird.
Der Stoff wird soweit zerkleinert, dass man den Stoff unsortiert in eine Vorkammer einbringt Die Kennung in dieser Phase als Vorkennung ermöglicht - siehe Figur 1 - . Das Merkmal für den Schlüssel im gesamten Prozess ist.

3. Anspruch Nr. 3
**dadurch gekennzeichnet, dass** die Erfindung in der Anwendung in der Verfahrensweise eine Kennung wie Anspruch Nr. 2 und Anspruch Nr. 1 aussagt, Abfälle entschlüsselt nach Merkmalen die auf das End- und Zwischenprodukt aufgezeichnete Reihen entschlüsselt und die Eigenschaftsprofile im Produkt mit dem Eigenschaftsprofil des Abfalls verschließt. Aus Figur 1 wird Figur 2 entschlüsselt und mit dem Generalschlüssel Abb. 1 bis Abb. 6 in den Schlüsselbereich von Feinschließungen gelangt. Die Stoffe werden mit Additiv, was in Figur 2 als Gesamtheit mit
6 Hauptschlüsseln, die jeweils mit 5 Unterschlüsseln ausgestattet sind in sich ein Generalschließsystem beinhalten. Somit ist mit dieser Erfindung die Verknüpfung aller Elemente möglich.

4. Anspruch Nr. 4
**dadurch gekennzeichnet, dass** die Erfindung wie Anspruch Nr. 1 bis Anspruch Nr. 3 beschrieben die Elemente, die oft oder überhaupt nicht miteinander verknüpfbar sind, die nicht bindungsfähig sind überbrücken, bindungsfähig macht. Die Erfindung weist erstmals belastbar nach, dass man Elemente - Stoffe bindet, ohne die Abfälle aus dem ein Produkt entsteht, ohne sie vorher zu sortieren, in hochwertige Produkte überführt. Die Eigenschaften der Abfälle sind per Hilfsmittel, Additiven in ein System eingebunden und zur Messungsgröße mit gleichzeitiger Codierung für den Weiterprozess entschlüsselt und für weitere Produktketten schließbar geworden. Der Komplex - wie Figur 2 - aufzeigt in Figur 3 übergeht, ist nun wiederum in weitere Richtungen mess- und schließbar.
Dabei ist bei allen Figuren bis einschließlich Figur 1 bis 8 die Entschlüsselung mit der Passung der Zuordnung von Ausgangsstoffen zum Endprodukt noch nicht in die entscheidende Schließphase möglich. Durch die Brechung der Form - Figur 8 in Figur 9 - ist Figur 9 Abb. 28 eine neue Qualität entstanden. Die Abbildung 28 zeigt das Glied in einer Kette, das nicht bei Figuren bis Figur 8 möglich ist. Die Strukturen der Eigenschaften haben eine neue ausschlaggebende Qualität erfahren. Diese ist bei der Produktgestaltung ein Quantensprung in Qualitäts- und in Anwendungsmöglichkeiten bezüglich der Qualitätsverbesserung und somit bis zur Entstehung neuer
Eigenschaften der Produkte geworden.

5. Anspruch Nr. 5
**dadurch gekennzeichnet, dass** die Erfindung wie in Anspruch Nr. 1 bis Nr. 4 gekennzeichnet die Neuheit hat, die Produkte die in Leistung und Qualität mit der Leistungsverbesserung und Kostenersparnis herzustellen sind, z. B. werden alte TV-Geräte insbesondere die Bildröhren, die sonst nur Sondermüll sind, in der Kette von Figur 1 bis Figur 16 zerlegt und wieder im Produkt zusammengesetzt. Der Vorteil ist, dass die alten verbrauchten Fernsehgeräte, die Bildröhren, das Gehäuse inkl. aller Störstoffe unsortiert über eine Silikatbindung in eine Solaranlage überführt werden. Diese Solaranlage ist nun als Solarkocher für die Aufbereitung von Speisen und Wasser ohne den Einsatz fossiler Brennstoffe einsetzbar. Die Elemente sind im Baukastensystem vorgefertigt und werden in entsprechender Bausatzanleitung als Bausatz geliefert und vor Ort zusammengesetzt, verklebt und sind somit mit Solarmotor ausrüstbar und können somit den optimalen Brennwinkel einstellen um die Energie optimal zu nutzen, wobei die Steuerung den Prozess so steuert, dass man wie bei modernen Öfen den Prozess genau regulieren kann. Das Kochgut kann somit entsprechend modernster ernährungswissenschaftlicher Fakten aufbereitet werden.

6. Anspruch Nr. 6
**dadurch gekennzeichnet, dass** die Erfindung wie Anspruch Nr. 1 bis 5 gekennzeichnet die Neuheit bringt, dass Zunder, der bei der Stahlherstellung entsteht wiederverwertet werden kann. Der Zunder ist zur Zeit nur mit erheblichem Kostenaufwand wiederverwertbar. Die Erfindung ermöglicht, dass das Rohmaterial in einer entsprechenden mobilen oder stationären Anlage vor Ort so aufbereitet werden kann, dass der Abfall (der Zunder) mit Additiven angereichert wird - Figur 1 und Figur 2 - und somit entschlüsselt in ein Schließsystem eingebracht wird. Das Merkmal ist jetzt, dass der Staub das feinkörnige Material über die Binder zu einem z.B. eiergroßen Teil geworden ist und dieses Teil ist mit Hilfsmitteln und Additiven so konzipiert, dass es im Hochofen verhüttet werden kann. Die Verhüttung ist kostensparend, da das Teil einen sehr hohen Erzanteil hat, Koks einspart und einen hohen Anteil an Eigenenergie abgibt, der das entstehen von hochwertigem Stahl und hochwertiger Schlacke gewährleistet - wie Figur 1 bis Figur 16 beweist, ist einmal hochwertiger Stahl mit wesentlich weniger Energieaufwand produziert worden und zusätzlich der Basisstoff für Solarzellen, die als Solaröfen produziert werden mitentstanden.

7. Anspruch Nr. 7
**dadurch gekennzeichnet, dass** die Erfindung wie Anspruch Nr. 1 bis 4 gekennzeichnet die Neuheit bringt, dass gesamte Produkte dadurch in ihrer Funktionsgestaltung bzw. Qualitätsverbesserung neue, bessere und genauer gezielte Eigenschaften aufweisen, die bisher nicht möglich waren oder nur mit erheblichen Kostenaufwendungen erreichbar sind, z. B. ein Eierbecher der gleichzeitig als Solarkocher in der Form eines Bechers das Ei minutengenau kocht Dies aus einem Basismaterial das als Abfall bislang die Umwelt erheblich beeinträchtigt hat und nun als Massenprodukt in einer umweltverträglichen Produktion hergestellt wird. Die Produktpalette geht in alle Lebensbereiche und stellt höchste ökologische Ansprüche. Alle Produkte sind wiederverwertbar und sind nach dem gesamten System, wie Anspruch 1 bis Anspruch 4 gekennzeichnet, als Einheit oder Teil geschützt.
Jedes einzelne Produkt, jede einzelne Maschine, jedes einzelne Teil, jeder Verfahrensschritt ist somit als Teil- und Gesamtsystemgeschützt.
